# EUROPÄISCHE PATENTSCHRIFT

(11) **EP 2 925 205 B1**
(45) Veröffentlichungstag und Bekanntmachung des Hinweises auf die Patenterteilung: **10.05.2017**
(21) Anmeldenummer: 12809631.0
(22) Anmeldetag: 28.11.2012
(51) Int. Cl.: A47L 11/30, A47L 11/40, B60L 15/20

(54) **SELBSTFAHRENDE BODENREINIGUNGSMASCHINE UND VERFAHREN ZUM BETREIBEN EINER SELBSTFAHRENDEN BODENREINIGUNGSMASCHINE**
SELF-PROPELLED FLOOR CLEANING MACHINE, AND METHOD FOR OPERATING A SELF-PROPELLED FLOOR CLEANING MACHINE
MACHINE DE NETTOYAGE DE SOLS AUTOMOTRICE ET PROCÉDÉ POUR FAIRE FONCTIONNER UNE MACHINE DE NETTOYAGE DE SOLS AUTOMOTRICE

(43) Veröffentlichungstag der Anmeldung: 07.10.2015
(73) Patentinhaber: Alfred Kärcher GmbH & Co. KG, 71364 Winnenden (DE)
(72) Erfinder: MERZ, Jürgen, 71336 Waiblingen (DE); NONNENMANN, Frank, 73614 Schorndorf (DE); ÖSTERLE, Michael, 71554 Weissach im Tal (DE); NOLLER, Bernd, 76669 Bad Schönborn (DE)
(74) Vertreter: Hoeger, Stellrecht & Partner Patentanwälte mbB
(86) Internationale Anmeldenummer: PCT/EP2012/073868
(87) Internationale Veröffentlichungsnummer: WO 2014/082667

(56) Entgegenhaltungen:
- EP-A1- 0 792 615
- EP-A2- 0 587 120
- DE-A1- 3 043 004
- FR-A1- 2 573 976
- US-A- 4 103 566
- US-A- 4 334 719
- US-A- 4 803 753
- US-A- 5 386 742
- US-B2- 7 041 029

## Beschreibung

Die Erfindung betrifft eine selbstfahrende Bodenreinigungsmaschine, umfassend eine Boden-Reinigungseinrichtung, ein lenkbares Vorderrad, eine Lenkeinrichtung, welche dem Vorderrad zugeordnet ist und welche ein Lenkrad und eine mechanische Lenkstange umfasst, die das Vorderrad und das Lenkrad verbindet, eine Lenkwinkel-Sensoreinrichtung, welche eine Winkelstellung des Lenkrads oder der Lenkstange erfasst, und eine Hinterradeinrichtung mit mindestens einem linken Hinterrad und mindestens einem rechten Hinterrad.

Die Erfindung betrifft ferner ein Verfahren zum Betreiben einer Bodenreinigungsmaschine.

Aus der nicht vorveröffentlichten PCT/EP 2011/059681 vom 10. Juni 2011 ist eine selbstfahrende Bodenreinigungsmaschine bekannt, umfassend eine Vorderradeinrichtung, eine Lenkeinrichtung, welche der Vorderradeinrichtung zugeordnet ist, eine Lenkwinkel-Sensoreinrichtung, durch welche ein Lenkwinkel an der Vorderradeinrichtung detektierbar ist, eine Hinterradeinrichtung mit mindestens einem linken Hinterrad und mindestens einem rechten Hinterrad, eine erste elektromotorische Antriebseinrichtung, welche dem mindestens einem linken Hinterrad zugeordnet ist, eine zweite elektromotorische Antriebseinrichtung, welche dem mindestens einem rechten Hinterrad zugeordnet ist, eine Reinigungsflüssigkeits-Beaufschlagungseinrichtung, durch welche Reinigungsflüssigkeit auf einen Boden ausbringbar ist mit einem Beaufschlagungsbereich, welcher zwischen der Vorderradeinrichtung und der Hinterradeinrichtung angeordnet ist, und eine Steuerungseinrichtung, welche signalwirksam mit der Lenkwinkel-Sensoreinrichtung, der ersten elektromotorische Antriebseinrichtung und der zweiten elektromotorischen Antriebseinrichtung verbunden ist, wobei die erste elektromotorische Antriebseinrichtung und die zweite elektromotorische Antriebseinrichtung in Abhängigkeit von Signalen der Lenkwinkel-Sensoreinrichtung jeweils individuell ansteuerbar sind.

Aus der DE 30 43 004 A1 ist ein elektrischer Drehstrom-Antrieb für mehrachsige Fahrzeuge bekannt, insbesondere des spurgebundenen, gleislosen Straßenverkehrs, bei dem die Radsätze von mehreren Drehstrommotoren angetrieben werden, die an einen steuerbaren Umrichter angeschlossen sind und bei dem ein Drehzahlausgleich der angetriebenen Räder bei Kurvenfahrten vorgesehen ist. Die Radsätze weisen dabei Einzelradantrieb auf.

Aus der EP 0 398 393 B1 ist eine Antriebssteuerung an einer durch eine Bedienungsperson bedienbaren Schrubbvorrichtung zum Warten von Fußböden bekannt, mit einer Motorantriebseinrichtung, die zum Antreiben der Schrubbscheiben angeordnet ist, einem Abstreicher und einer Einrichtung zum Anheben des Abstreichers, einem Vakuumgebläse und einer Einrichtung zum Abschalten des Vakuumgebläses, einer Schrubbwasserzuführung und einer Einrichtung zum Absperren der Schrubbwasserzuführung, Betriebssteuerungen zum Erzeugen elektrischer Signale entsprechend einer Vorwärts-, Rückwärts- und Neutralbewegung der Schrubbvorrichtung, und einer Einrichtung zum Übertragen der Signale in Motorantriebssignale. Die Einrichtung zum Anheben des Abstreichers ist mit dem einer Rückwärtsbewegung der Schrubbvorrichtung entsprechenden Signal verbunden und spricht auf dieses Signal an. Die Einrichtung zum Abschalten der Schrubbwasserzufuhr ist mit dem einem Neutralzustand der Schrubbvorrichtung entsprechenden Signal verbunden und spricht auf dieses Signal an.

Aus der US 5,487,438 ist ein Antriebssystem für ein Elektrofahrzeug bekannt, welches ein linkes Rad und ein rechtes Rad aufweist.

Aus der FR 2 573 976 A1 ist eine Bodenreinigungsmaschine bekannt, welche ein lenkbares Vorderrad, ein linkes Hinterrad und ein rechtes Hinterrad aufweist, wobei die Hinterräder angetrieben sind und den Hinterrädern ist ein Differenzial zugeordnet.

Die US 7,041,029 B2 offenbart eine Bodenreinigungsmaschine mit einem Joystick-Kontrollsystem. Die aus US 7,041,029 B2 bekannte selbstfahrende Bodenreinigungsmaschine umfasst eine Boden-Reinigungseinrichtung, ein lenkbares Vorderrad, eine Lenkeinrichtung, welche dem Vorderrad zugeordnet ist, eine Hinterradeinrichtung mit mindestens einem linken Hinterrad und mindestens einem rechten Hinterrad, eine erste Antriebseinrichtung zum Antrieb des Vorderrads, eine zweite Antriebseinrichtung zum Antrieb der Hinterradeinrichtung, eine Differentialeinrichtung für die Hinterradeinrichtung, welche unterschiedliche Drehzahlen für das mindestens eine linke Hinterrad und das mindestens eine rechte Hinterrad ermöglicht, und eine Steuerungseinrichtung. Der Erfindung liegt die Aufgabe zugrunde, eine selbstfahrende Bodenreinigungsmaschine der eingangs genannten Art bereitzustellen, welche bei hoher Manövrierbarkeit eine hohe Fahrsicherheit aufweist.
Diese Aufgabe wird bei der eingangs genannten selbstfahrenden Bodenreinigungsmaschine erfindungsgemäß dadurch gelöst, dass eine erste Antriebseinrichtung zum Antrieb des Vorderrads vorgesehen ist, eine zweite Antriebseinrichtung zum Antrieb der Hinterradeinrichtung vorgesehen ist, eine Differentialeinrichtung für die Hinterradeinrichtung vorgesehen ist, welche unterschiedliche Drehzahlen für das mindestens eine linke Hinterrad und das mindestens eine rechte Hinterrad ermöglicht, und eine Steuerungseinrichtung vorgesehen ist, welche signalwirksam mit der Lenkwinkel-Sensoreinrichtung, der ersten Antriebseinrichtung und der zweiten Antriebseinrichtung verbunden ist, wobei die Steuerungseinrichtung die erste Antriebseinrichtung und die zweite Antriebseinrichtung in Abhängigkeit von Signalen der Lenkwinkel-Sensoreinrichtung ansteuert, wobei die Steuerungseinrichtung einen ersten Betriebsmodus umfasst, welcher bei einem Lenkwinkel von 90° oder in der Nähe von 90° bezogen auf eine Geradeausfahrtsstellung des Vorderrads die zweite Antriebseinrichtung blockiert, und die Steuerungseinrichtung einen zweiten Betriebsmodus umfasst, bei dem das Vorderrad, das mindestens eine linke Hinterrad und das mindestens eine rechte Hinterrad die gleiche Geschwindigkeit aufweisen.

Bei der erfindungsgemäßen Lösung sind sowohl das Vorderrad als auch die Hinterradeinrichtung mit dem mindestens einem linken Hinterrad und dem mindestens einen rechten Hinterrad angetrieben. Es lassen sich dadurch hohe Fahrgeschwindigkeiten bei hoher Fahrsicherheit erreichen. Die selbstfahrende Bodenreinigungsmaschine weist eine hohe Traktion mit hohem Steigungsvermögen auf. Dies ermöglicht beispielsweise auch einen Einsatz der Bodenreinigungsmaschine als Zug- oder Schubfahrzeug.

Durch die Differentialeinrichtung an der Hinterradeinrichtung lassen sich unterschiedliche Drehzahlen für das mindestens eine linke Hinterrad und das mindestens eine rechte Hinterrad erreichen. Dadurch lässt sich eine hohe Wendigkeit und Manövrierbarkeit für die Bodenreinigungsmaschine erreichen. Die Differentialeinrichtung ermöglicht unterschiedliche Geschwindigkeiten an der Hinterradeinrichtung.

Über die erste Antriebseinrichtung und die zweite Antriebseinrichtung ergeben sich auch umfangreiche Ansteuerungsmöglichkeiten, um vorteilhafte Fahreigenschaften (bezüglich Wendigkeit und Manövrierbarkeit, Geschwindigkeit, Steigungsvermögen usw.) für vorliegende Fahrparameter zu erhalten.

Es ist eine Steuerungseinrichtung vorgesehen, welche signalwirksam mit einer Lenkwinkel-Sensoreinrichtung, der ersten Antriebseinrichtung und der zweiten Antriebseinrichtung verbunden ist, wobei die Steuerungseinrichtung die erste Antriebseinrichtung und die zweite Antriebseinrichtung in Abhängigkeit von Signalen der Lenkwinkel-Sensoreinrichtung ansteuert und insbesondere individuell ansteuert. Es lassen sich dadurch für spezifische Lenkwinkel (vorgegeben durch einen Bediener) optimale Fahrbedingungen einstellen. Beispielsweise erfolgt eine Begrenzung der maximalen Fahrgeschwindigkeit in Abhängigkeit eines detektierten Lenkwinkels, sodass zu schnelle Kurvenfahrten vermieden werden können.

Die Steuerungseinrichtung umfasst einen ersten Betriebsmodus, welcher bei einem Lenkwinkel von 90° oder in der Nähe von 90° (beispielsweise mit einer Abweichung von +/- 5° von 90°) bezogen auf eine Geradeausfahrtsstellung des Vorderrads die zweite Antriebseinrichtung blockiert. Bei einem solchen Lenkwinkel erfolgt dann kein Antrieb der Hinterradeinrichtung mehr. Durch die Blockade sind unterschiedliche Drehzahlen an der Hinterradeinrichtung realisiert. Es ist dadurch möglich, dass bei einer Kurvenfahrt das äußere Hinterrad und das innere Hinterrad entgegengesetzte Drehzahlen aufweisen. Es lässt sich eine hohe Manövrierbarkeit realisieren.

Weiterhin umfasst die Steuerungseinrichtung einen zweiten Betriebsmodus, bei dem das Vorderrad, das mindestens eine linke Hinterrad und das mindestens eine rechte Hinterrad die gleiche Geschwindigkeit aufweisen. Dadurch kann beispielsweise eine hohe Steigfähigkeit der Bodenreinigungsmaschine realisiert werden.

Günstig ist es, wenn die erste Antriebseinrichtung einen Radmotor und insbesondere Radnabenmotor umfasst. Es lässt sich dadurch das Vorderrad direkt antreiben und der Aufwand beispielsweise für ein Getriebe ist minimiert.

Es ist dann günstig, wenn die erste Antriebseinrichtung bei einer Lenkschwenkbewegung des Vorderrads mitverschwenkt ist. Es muss dadurch kein Getriebe vorgesehen werden, welches ein Antriebsmoment beispielsweise eines karosseriefest angeordneten Motors auf das Vorderrad überträgt.

Günstig ist es, wenn die erste Antriebseinrichtung einen Elektromotor umfasst. Es lässt sich dadurch auf einfach Weise eine abgasfreie Bodenreinigungsmaschine realisieren.

Vorteilhafterweise umfasst die zweite Antriebseinrichtung einen gemeinsamen Antrieb für das mindestens eine linke Hinterrad und das mindestens eine rechte Hinterrad. Es lässt sich dadurch die Anzahl der benötigten Motoren minimieren. Die Differentialeinrichtung erlaubt dann trotz gemeinsamem Antrieb unterschiedliche Drehzahlen bzw. Bahngeschwindigkeiten für das mindestens eine linke Hinterrad und das mindestens eine rechte Hinterrad.

Günstig ist es, wenn die zweite Antriebseinrichtung einen Elektromotor umfasst. Dadurch lässt sich eine abgasfreie Bodenreinigungsmaschine realisieren, die auch in geschlossenen Räumen einsetzbar ist.

Bei einer Ausführungsform ist die Differentialeinrichtung eine Achsdifferentialeinrichtung. Sie ermöglicht unterschiedliche Drehzahlen für das linke Hinterrad und das rechte Hinterrad. Dadurch erhält man eine hohe Wendigkeit und Manövrierbarkeit für die Bodenreinigungsmaschine.

Insbesondere ist die Differentialeinrichtung ein mechanisches Differentialgetriebe bzw. umfasst ein solches. Dadurch kann beispielsweise ein gemeinsamer Motor für das mindestens eine linke Hinterrad und das mindestens eine rechte Hinterrad verwendet werden, wobei trotzdem unterschiedliche Drehzahlen für das mindestens eine linke Hinterrad und das mindestens eine rechte Hinterrad möglich sind.

Es ist vorteilhaft, wenn eine Sensoreinrichtung zur Ermittlung einer Geschwindigkeitsvorgabe vorgesehen ist, welche signalwirksam mit der Steuerungseinrichtung verbunden ist, wobei insbesondere die Steuerungseinrichtung in Abhängigkeit von Signalen der Lenkwinkel-Sensoreinrichtung und der Sensoreinrichtung zur Ermittlung einer Geschwindigkeitsvorgabe die erste Antriebseinrichtung und die zweite Antriebseinrichtung ansteuert und insbesondere individuell ansteuert. Bei der Ansteuerung wird dann zusätzlich zu dem Lenkwinkel auch die Geschwindigkeitsvorgabe ermittelt. Die Geschwindigkeitsvorgabe muss dabei nicht unbedingt der durch die Steuerungseinrichtung bewirkten tatsächlichen Geschwindigkeit entsprechen. Wenn beispielsweise detektiert wird, dass die Geschwindigkeitsvorgabe für den vorgegebenen Lenkwinkel zu hoch ist, dann erfolgt eine Begrenzung der maximalen Geschwindigkeit.

Die Sensoreinrichtung zur Ermittlung einer Geschwindigkeitsvorgabe ist insbesondere eine Sensoreinrichtung zur Ermittlung einer Stellung eines oder mehrerer Betätigungselemente. Ein Betätigungselement ist beispielsweise ein Fahrpedal zur Geschwindigkeitsvorgabe. Es kann auch beispielsweise die Stellung eines Bremspedals mitberücksichtigt werden.

Insbesondere weisen dann in dem ersten Betriebsmodus das mindestens eine linke Hinterrad und das mindestens eine rechte Hinterrad Drehzahlen mit unterschiedlichem Vorzeichen auf, um eine hohe Wendigkeit zu erreichen.

Die Bodenreinigungsmaschine weist insbesondere eine Mittelebene auf, zu welcher das mindestens eine linke Hinterrad und das mindestens eine rechte Hinterrad spiegelsymmetrisch angeordnet sind und an welcher bei Geradeausfahrtsstellung das Vorderrad positioniert ist und insbesondere parallel positioniert ist. Es lässt sich dadurch eine dreirädrige Bodenreinigungsmaschine realisieren, welche eine hohe Wendigkeit aufweist.

Insbesondere liegt bei einer Kurvenfahrt ein Drehpunkt der Bodenreinigungsmaschine auf einem Mittelpunkt einer Achse der Hinterradeinrichtung. Es lässt sich so eine hohe Wendigkeit realisieren. Dadurch ergibt sich eine optimierte Bodenreinigungsfähigkeit.

Bei einer Ausführungsform ist es vorgesehen, dass mindestens eine Anhängekupplung an der Bodenreinigungsmaschine vorhanden ist, welche insbesondere an einer Karosserie angeordnet ist. Durch den Antrieb der Vorderrads und der Hinterradeinrichtung kann grundsätzlich die Bodenreinigungsmaschine als Zug- oder Schubmaschine genutzt werden. Über die mindestens eine Anhängekupplung lassen sich Anhänger anhängen. Beispielsweise lässt sich dadurch über die Bodenreinigungsmaschine ein Transportsystem realisieren, wobei gleichzeitig mit einem Transportvorgang über die Bodenreinigungsmaschine als Zug- bzw. Schubmaschine ein Bodenreinigungsvorgang durchführbar ist.

Insbesondere ist die Bodenreinigungsmaschine als Schrubbmaschine oder Schrubb-Saug-Maschine ausgebildet oder als Kehrmaschine ausgebildet.

Es kann dabei vorgesehen sein, dass die Boden-Reinigungseinrichtung ein oder mehrere Schrubbelemente aufweist, welche insbesondere rotierbar sind. Es ist günstig, wenn diese zwischen der Vorderrad- und der Hinterradeinrichtung angeordnet sind. Dadurch ergibt sich ein einfacher konstruktiver Aufbau der Bodenreinigungsmaschine mit optimiertem Reinigungsergebnis.

Es ist ferner günstig, wenn die Boden-Reinigungseinrichtung eine Reinigungsflüssigkeits-Beaufschlagungseinrichtung umfasst, durch welche Reinigungsflüssigkeit auf einen Boden ausbringbar ist. Dadurch lässt sich eine effektive Reinigung von Glattflächen durchführen.

Vorteilhafterweise liegt der Beaufschlagungsbereich zwischen der Vorderrad- und der Hinterradeinrichtung. Dadurch kann das Vorderrad im "trockenen Bereich" fahren.

Der Erfindung liegt ferner die Aufgabe zugrunde, ein Verfahren der eingangs genannten Art bereitzustellen, bei welcher sich umfangreiche Einsatzmöglichkeiten für die Bodenreinigungsmaschine ergeben.

Diese Aufgabe wird bei dem eingangs genannten Verfahren erfindungsgemäß dadurch gelöst, dass ein durch eine Lenkeinrichtung gelenktes Vorderrad durch eine erste Antriebseinrichtung angetrieben wird, wobei die Lenkeinrichtung ein Lenkrad und eine mechanische Lenkstange umfasst, die das Vorderrad und das Lenkrad verbindet, und eine Hinterradeinrichtung mit mindestens einem linken Hinterrad und mit mindestens einem rechten Hinterrad durch eine zweite Antriebseinrichtung angetrieben wird, wobei der Hinterradeinrichtung eine Differentialeinrichtung für das mindestens eine linke Hinterrad und das mindestens eine rechte Hinterrad zugeordnet ist, durch welche das mindestens eine linke Hinterrad und das mindestens eine rechte Hinterrad unterschiedliche Drehzahlen aufweisen können, und wobei eine Ansteuerung der ersten Antriebseinrichtung für das Vorderrad und der zweiten Antriebseinrichtung für die Hinterradeinrichtung in Abhängigkeit eines ermittelten Lenkwinkels für das Vorderrad erfolgt, wobei der ermittelte Lenkwinkel die Winkelstellung des Lenkrads oder der Lenkstange ist, und wobei ein erster Betriebsmodus vorgesehen ist, welcher bei einem Lenkwinkel von 90° oder in der Nähe von 90° bezogen auf eine Geradeausfahrtsstellung des Vorderrads die zweite Antriebseinrichtung blockiert, und ein zweiter Betriebsmodus vorgesehen ist, bei dem das Vorderrad, das mindestens eine linke Hinterrad und das mindestens eine rechte Hinterrad die gleiche Geschwindigkeit aufweisen.

Das erfindungsgemäße Verfahren weist bereits die im Zusammenhang mit der erfindungsgemäßen Bodenreinigungsmaschine erläuterten Vorteile auf.

Weitere vorteilhafte Ausgestaltungen des erfindungsgemäßen Verfahrens wurden ebenfalls bereits im Zusammenhang mit der erfindungsgemäßen Bodenreinigungsmaschine erläutert.

Es erfolgt eine Ansteuerung der ersten Antriebseinrichtung für das Vorderrad und der zweiten Antriebseinrichtung für die Hinterradeinrichtung in Abhängigkeit eines ermittelten Lenkwinkels für das Vorderrad. Dadurch ergibt sich eine optimierte Fahrtsicherheit; es lässt sich beispielsweise eine Geschwindigkeitsbegrenzung bei Kurvenfahrten auf einfache Weise durchführen.

Insbesondere erfolgt auch die Ansteuerung in Abhängigkeit einer ermittelten Geschwindigkeitsvorgabe beispielsweise über ein Fußpedal (Gaspedal) und/oder Bremspedal durch einen Bediener.

Es ergibt sich ein einfacher Aufbau, wenn die Differentialeinrichtung ein mechanisches Achsdifferential umfasst. Dadurch ist es beispielsweise möglich, einen gemeinsamen Motor sowohl für das mindestens eine linke Hinterrad als auch für das mindestens eine rechte Hinterrad vorzusehen.

Es wird beim Ermitteln des Lenkwinkels von 90° oder in der Nähe von 90° bezogen auf eine Geradeausfahrtsstellung ein Antrieb der Hinterradeinrichtung blockiert und eine Drehzahl für das mindestens eine linke Hinterrad und eine Drehzahl für das mindestens eine rechte Hinterrad kann sich mit unterschiedlichem Vorzeichen einstellen. Dadurch ergeben sich optimierte Kurvenfahrtmöglichkeiten und insbesondere ergibt sich eine hohe Wendigkeit und Manövrierbarkeit.

Die nachfolgende Beschreibung bevorzugter Ausführungsformen dient im Zusammenhang mit den Zeichnungen der näheren Erläuterung der Erfindung. Es zeigen:
- Figur 1: eine schematische Seitenansicht eines Ausführungsbeispiels einer erfindungsgemäßen Bodenreinigungsmaschine;

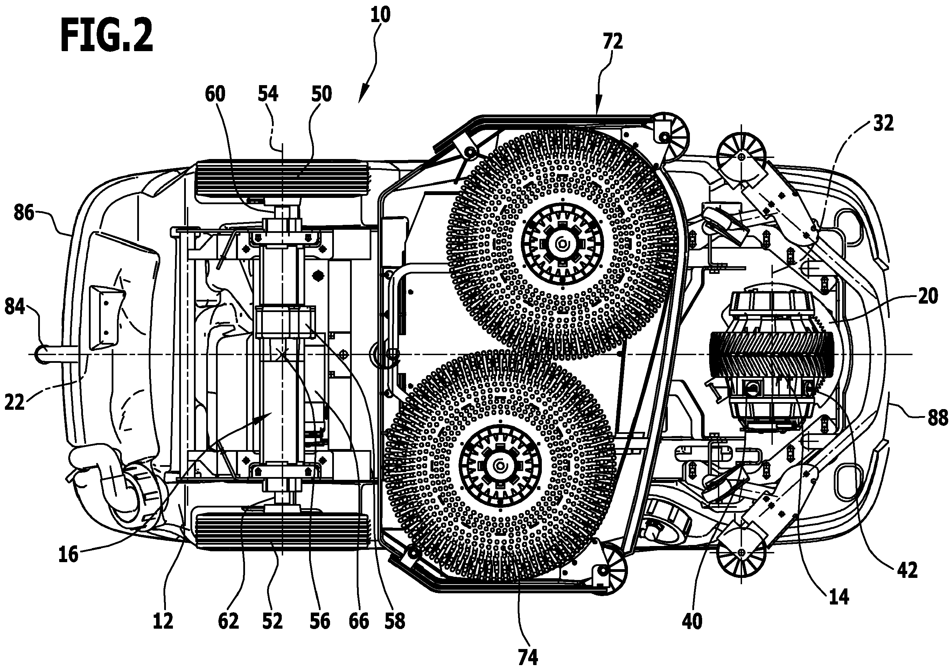

- Figur 2: eine Unteransicht der Bodenreinigungsmaschine gemäß Figur 1;
- Figur 3: eine schematische Darstellung der Antriebseinheit der Bodenreinigungsmaschine gemäß Figur 1; und
- Figur 4: schematisch eine Steuerungseinrichtung mit angesteuerten Komponenten und Komponenten, welche der Steuerungseinrichtung Signale übermitteln.

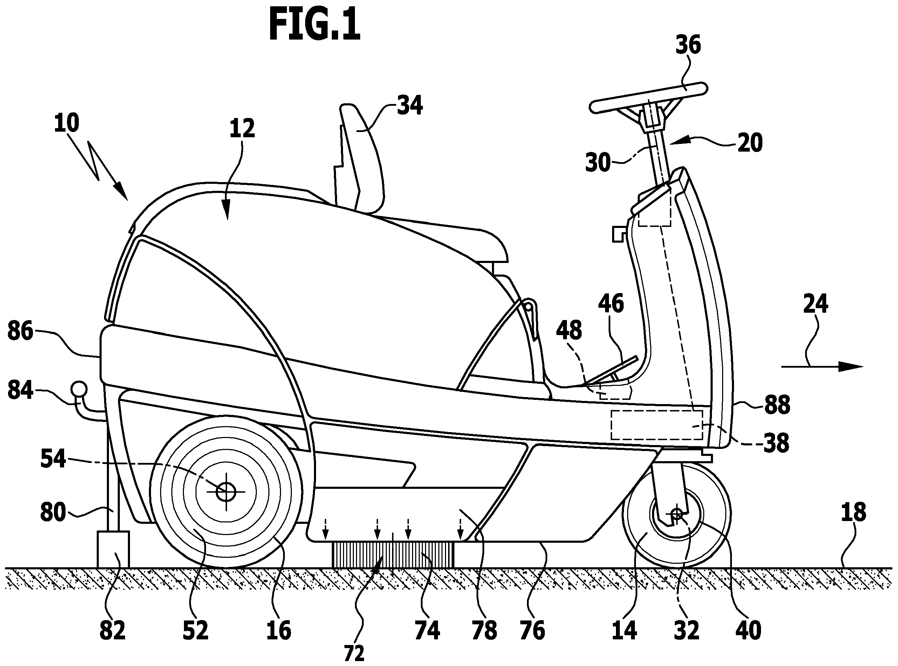

Ein Ausführungsbeispiel einer erfindungsgemäßen selbstfahrenden Bodenreinigungsmaschine, welches in Figur 1 gezeigt und dort mit 10 bezeichnet ist, ist personengeführt. Die Bodenreinigungsmaschine 10 weist eine Karosserie 12 auf. An der Karosserie 12 sitzen ein Vorderrad 14 und eine Hinterradeinrichtung 16. Über das Vorderrad 14 und die Hinterradeinrichtung 16 kann die Bodenreinigungsmaschine 10 auf einem zu reinigenden Boden 18 fahren.

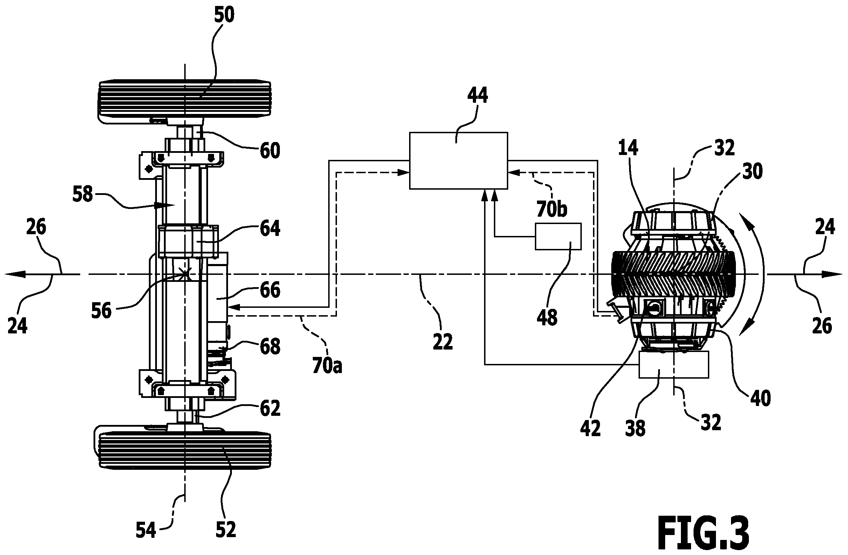

Das Vorderrad 14 ist mit einer als Ganzes mit 20 bezeichneten Lenkeinrichtung verbunden. Durch die Lenkeinrichtung 20 kann eine Winkelstellung des Vorderrads 14 zu einer Mittelebene 22 (Figur 3) der Bodenreinigungsmaschine 10 eingestellt werden. Bei Geradeausfahrt (in den Figuren 1 und 3 durch das Bezugszeichen 24 angedeutet) ist das Vorderrad 14 parallel zur Mittelebene 22 ausgerichtet und ein entsprechender Lenkwinkel ist ein Nullwinkel.

Die Geradeausfahrt 24 umfasst dabei eine Vorwärtsfahrt und eine Rückwärtsfahrt. Die Vorwärtsfahrt ist in Figur 3 mit dem Bezugszeichen 26 und die Rückwärtsfahrt mit 28 angedeutet.

Die Lenkeinrichtung 20 definiert eine Lenkachse 30. Diese Lenkachse 30 liegt vorzugsweise in der Mittelebene 22. Die Lenkachse 30 ist quer und beispielsweise senkrecht zu einer Radachse 32 des Vorderrads 14 orientiert. Das Vorderrad 14 ist um die Radachse 32 drehbar, welche quer zur Mittelebene 22 liegt. Bei Geradeausfahrt in der Geradeausfahrtrichtung 24 ist die Radachse 32 senkrecht zu der Mittelebene 22 orientiert.

An der Karosserie 12 ist ein Sitz 34 für einen Fahrer angeordnet. Ein auf dem Sitz 34 sitzender Fahrer kann ein Lenkrad 36 der Lenkeinrichtung 20 bedienen.

Die Bodenreinigungsmaschine 10 umfasst eine Lenkwinkel-Sensoreinrichtung 38. Durch diese Lenkwinkel-Sensoreinrichtung 38 ist ein Lenkwinkel an dem Vorderrad 14 und insbesondere eine Winkelstellung des Vorderrads 14 relativ zu der Mittelebene 22 detektierbar.

Die Lenkeinrichtung 20 umfasst beispielsweise eine mechanische Lenkstange, welche das Vorderrad 14 und das Lenkrad 36 verbindet. Die Lenkwinkel-Sensoreinrichtung 38 erfasst dann insbesondere eine Winkelstellung des Lenkrads 36 oder der Lenkstange.

Alternativ ist es beispielsweise auch möglich, dass die Lenkeinrichtung 20 Lenkstangen mit dazwischenliegendem Getriebe umfasst. Eine Lenkstange ist mit dem Lenkrad 36 verbunden und eine weitere Lenkstange ist mit dem Vorderrad 14 verbunden. Ein dazwischen sitzendes Getriebe sorgt für eine Drehwinkeluntersetzung oder Drehwinkelübersetzung. Das Getriebe kann auch direkt mit dem Lenkrad 36 oder dem Vorderrad 14 verbunden sein.

Es ist beispielsweise auch möglich, dass die Lenkeinrichtung 20 einen Lenkmotor umfasst, wobei eine Lenkstellung des Vorderrads 14 dann motorisch angesteuert wird.

Dem Vorderrad 14 ist eine erste Antriebseinrichtung 40 zugeordnet, welche gesteuert das Vorderrad 14 in seiner Drehbewegung antreibt. Die erste Antriebseinrichtung 40 umfasst einen Radnabenmotor 42. Der Radnabenmotor 42 ist insbesondere ein Elektromotor.

Bei einer Lenkbewegung des Vorderrads 14 wird der Radnabenmotor 42 mitbewegt.

Die erste Antriebseinrichtung 40 für das Vorderrad 14 ist durch eine Steuerungseinrichtung 44 angesteuert. Die Lenkwinkel-Sensoreinrichtung 38 liefert ihre Signale für den ermittelten Lenkwinkel an die Steuerungseinrichtung 44, wobei diese Komponenten dazu signalwirksam miteinander verbunden sind.

Die Bodenreinigungsmaschine 10 umfasst bei einer Ausführungsform ein Fahrpedal 46 und ein Bremspedal als Betätigungselement. Durch Betätigung (insbesondere Fußbetätigung) dieses Fahrpedals 46 eventuell mit dem Bremspedal gibt ein Benutzer die Geschwindigkeit der Bodenreinigungsmaschine 10 vor. Wie unten stehend noch näher erläutert wird, muss die Geschwindigkeitsvorgabe nicht unbedingt der tatsächlichen Soll-Geschwindigkeit entsprechen; beispielsweise kann vorgesehen sein, dass, wenn für eine bestimmte Lenkwinkelstellung eine zu große Geschwindigkeit vorgegeben wird, die Steuerungseinrichtung 44 für eine Geschwindigkeitsbegrenzung ("Abregelung") sorgt.

Es ist dazu eine Sensoreinrichtung 48 (Figuren 1 und 3) vorgesehen, welche eine Geschwindigkeitsvorgabe durch den Bediener ermittelt. Bei dem in Figur 1 gezeigten Ausführungsbeispiel ermittelt die Sensoreinrichtung 48 eine Stellung des Fahrpedals 46 und des Bremspedals. Die Sensoreinrichtung 48 ist signalwirksam mit der Steuerungseinrichtung 44 verbunden und stellt dieser ihre Signale bereit.

Die Hinterradeinrichtung 16 umfasst (mindestens) ein linkes Hinterrad 50 und (mindestens) ein rechtes Hinterrad 52. Die Bezeichnung "links" und "rechts" ist dabei auf die Vorwärtsfahrtrichtung 26 bei Geradeausfahrt 24 bezogen.

Das linke Hinterrad 50 und das rechte Hinterrad 52 sind um eine gemeinsame Radachse 54 drehbar. Die Radachse 54 liegt bezüglich der Mittelebene 22 fest und senkrecht zu dieser; die Hinterradeinrichtung 16 ist ungelenkt.

Grundsätzlich kann die Hinterradeinrichtung 16 mehrachsig ausgebildet sein. Bei dem gezeigten Ausführungsbeispiel ist sie einachsig ausbildet. Die Bodenreinigungsmaschine 10 ist dann dreirädrig.

Bei einer Kurvenfahrt liegt ein Drehpunkt 56 (der Durchstoßpunkt der Drehachse) der Bodenreinigungsmaschine 10 als Ganzes auf einem Mittelpunkt 56 der Radachse 54 und dabei auf der Mittelebene 22.

Der Hinterradeinrichtung 16 ist eine Differentialeinrichtung 58 zugeordnet. Diese Differentialeinrichtung 58 ermöglicht unterschiedliche Drehzahlen für das linke Hinterrad 50 und das rechte Hinterrad 52. Dazu sitzt beispielsweise das linke Hinterrad 50 an einer ersten Welle 60 und das rechte Hinterrad 52 sitzt an einer zweiten Welle 62. Die erste Welle 60 und die zweite Welle 62 sind an ein Achsdifferentialgetriebe 64 gekoppelt.

Der Hinterradeinrichtung 16 ist eine zweite Antriebseinrichtung 66 zugeordnet, welche die Hinterradeinrichtung 16 und dabei das linke Hinterrad 50 und das rechte Hinterrad 52 in der Drehbewegung um die Radachse 54 antreibt. Wie oben erwähnt erlaubt dabei die Differentialeinrichtung 58 unterschiedliche Drehzahlen für das linke Hinterrad 50 und das rechte Hinterrad 52.

Die zweite Antriebseinrichtung 66 umfasst bei einem Ausführungsbeispiel einen gemeinsamen Motor 68 für das linke Hinterrad 50 und das rechte Hinterrad 52. Die Kombination aus zweiter Antriebseinrichtung 66 und der Differentialeinrichtung 58 bildet dann einen Differentialmotor.

Die zweite Antriebseinrichtung 66 ist signalwirksam an die Steuerungseinrichtung 44 gekoppelt, welche die zweite Antriebseinrichtung 66 ansteuert.

Die zweite Antriebseinrichtung 66 umfasst insbesondere einen Elektromotor. Beim Ausführungsbeispiel sind für die erste Antriebseinrichtung 40 und die zweite Antriebseinrichtung 66 Elektromotoren vorgesehen. Die Bodenreinigungsmaschine 10 umfasst dann eine Batterieeinrichtung zur Energieversorgung der Elektromotoren, welche insbesondere wiederaufladbar ist.

Es kann sich dabei um Elektromotoren handeln, deren Drehzahlen durch Vorgabe einer elektrischen Spannung festgelegt sind, wie beispielsweise Elektromotoren mit permanentmagnetischen Rotoren. Die Steuerungseinrichtung 44 kann dann durch entsprechende Steuerungsbefehle die Drehzahlen an der ersten Antriebseinrichtung 40 und der zweiten Antriebseinrichtung 66 vorgeben.

Es ist auch möglich, dass andere Motorentypen, wie beispielsweise Asynchronmotoren verwendet werden. In diesem Falle ermitteln entsprechende Sensoren an den Antriebseinrichtungen die Ist-Drehzahl und leiten diese an die Steuerungseinrichtung 44 weiter. Eine solche Ausführungsform ist in Figur 3 durch Signalleitungen 70a, 70b mit unterbrochenen Linien angedeutet.

Bei der Bodenreinigungsmaschine 10 sind sowohl das Vorderrad 14 als auch die Hinterradeinrichtung 16 mit dem linken Hinterrad 50 und dem rechten Hinterrad 52 angetrieben. Die Steuerungseinrichtung 44 sorgt in Abhängigkeit einer ermittelten Lenkstellung (detektiert durch die Lenkwinkel-Sensoreinrichtung 38) und einer Geschwindigkeitsvorgabe (übermittelt über die Sensoreinrichtung 48) für eine Anpassung der Geschwindigkeiten des Vorderrads 14 und des linken Hinterrads 50 und des rechten Hinterrads 52, wobei wiederum über die Differentialeinrichtung 58 an der Hinterradeinrichtung 16 bezüglich linkem Hinterrad 50 und bezüglich rechtem Hinterrad 52 unterschiedliche Geschwindigkeiten vorliegen können. Dies wird unten stehend noch näher erläutert.

Bei einem Ausführungsbeispiel ist die Bodenreinigungsmaschine 10 als Schrubbmaschine und insbesondere Schrubb-Saug-Maschine ausgebildet. Sie umfasst eine Boden-Reinigungseinrichtung 72, welche bei dem Ausführungsbeispiel der Schrubbmaschine bzw. Schrubb-Saug-Maschine eine Schrubb-Boden-Reinigungseinrichtung ist. Diese hat Schrubbelemente 74, welche an einer Unterseite 76 der Karosserie 12 angeordnet sind. Ein Schrubbelement 74 ist zwischen der Hinterradeinrichtung 16 und dem Vorderrad 14 beispielsweise rotatierbar dem Boden 18, auf dem die Bodenreinigungsmaschine 10 aufsteht, zugewandt angeordnet.

Die Boden-Reinigungseinrichtung 72 umfasst ferner eine Beaufschlagungseinrichtung 78 für Reinigungsflüssigkeit, über welche Reinigungsflüssigkeit in einem Beaufschlagungsbereich auf den zu reinigenden Boden 18 ausbringbar ist. Die Reinigungsflüssigkeit ist beispielsweise ein Gemisch aus Wasser und einem chemischen Reinigungszusatz. Die Beaufschlagungseinrichtung 78 umfasst eine Mehrzahl von Düsen durch welche die Reinigungsflüssigkeit in den Beaufschlagungsbereich ausbringbar ist. Die Düsen können dabei in einer oder mehreren Reihen angeordnet sein.

Die Düsen sind so angeordnet und ausgebildet, dass das oder die Schrubbelemente 74, welche Reinigungswerkzeuge sind, direkt besprüht werden oder von dort Reinigungsflüssigkeit auf den Boden 18 gelangt und/oder dass der Boden 18 direkt besprüht wird.

Der Beaufschlagungsbereich für Reinigungsflüssigkeit der Beaufschlagungseinrichtung 78 liegt zwischen dem Vorderrad 14 und der Hinterradeinrichtung 16. Bei einer Reinigungsfahrt fährt dann das Vorderrad 14 nicht in einem durch Reinigungsflüssigkeit beaufschlagten Bereich, d. h. fährt im trockenen Bereich, während die Hinterradeinrichtung 16 durch den mit Reinigungsflüssigkeit beaufschlagten Bereich des Bodens 18 fährt, d. h. im nassen Bereich fährt.

An der Karosserie 12 ist ein Tank für Reinigungsflüssigkeit angeordnet. Der Tank kann dabei ein Bereich für beispielsweise Wasser umfassen und einen Bereich für chemische Zusätze. Über den Tank bzw. über ein Mischungsbereich werden die Düsen mit Reinigungsflüssigkeit versorgt.

Bei einem Ausführungsbeispiel umfasst die Bodenreinigungsmaschine 10 eine Saugeinrichtung 80, über welche überschüssige Flüssigkeit vom Boden 18 aufsaugbar ist. Es ist dazu beispielsweise ein Saugbalken 82 vorgesehen, welcher auf dem Boden 18 beim Reinigungsbetrieb aufgesetzt ist. Dieser Saugbalken 82 ist bezogen auf die Vorwärtsfahrtrichtung 26 hinter der Hinterradeinrichtung 16 angeordnet. Über den Saugbalken 82 wird Flüssigkeit angesaugt und in einem Schmutzwassertank aufgenommen.

An der Karosserie 12 ist eine Anhängerkupplung 84 angeordnet. Bei dem gezeigten Ausführungsbeispiel ist eine Anhängerkupplung 84 an einem Hinterende 86 der Bodenreinigungsmaschine 10 positioniert. Es lässt sich dadurch ein Anhänger durch die Bodenreinigungsmaschine 10 ziehen (bei Vorwärtsfahrt 26) bzw. schieben (bei Rückwärtsfahrt 28). Durch die Anhängerkupplung 84 kann die Bodenreinigungsmaschine 10 als Zugmaschine eingesetzt werden, welche gleichzeitig einen Bodenreinigungsvorgang durchführt.

Es ist auch möglich, dass eine Anhängerkupplung an einem Vorderende 88 der Bodenreinigungsmaschine 10 an der Karosserie 12 angeordnet ist. Dadurch ist die Bodenreinigungsmaschine 10 als Schubmaschine (bei Vorwärtsfahrt 26) bzw. als Zugmaschine (bei Rückwärtsfahrt 28) einsetzbar.

Die selbstfahrende Bodenreinigungsmaschine 10 funktioniert wie folgt:

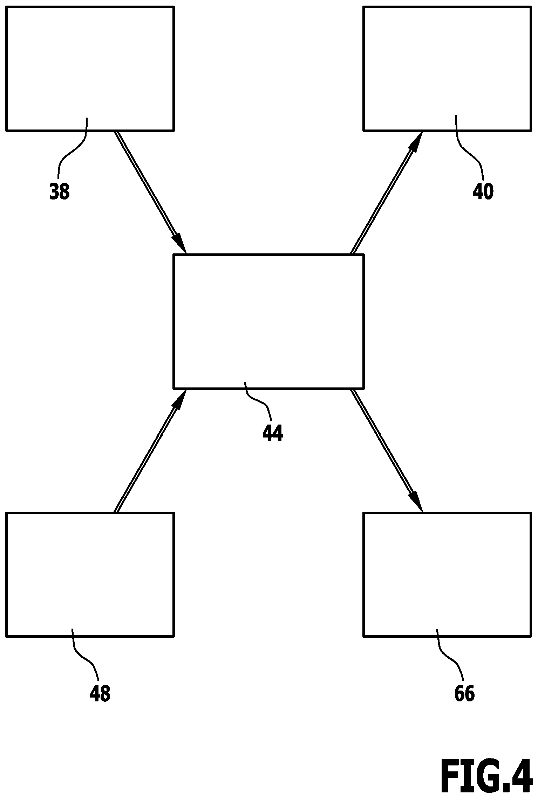

Sowohl das Vorderrad 14 über die erste Antriebseinrichtung 40 als auch die Hinterradeinrichtung 16 über die zweite Antriebseinrichtung 66 sind angetrieben. Die Steuerungseinrichtung 44 (vergleiche auch Figur 4) steuert die erste Antriebseinrichtung 40 und die zweite Antriebseinrichtung 66 an. Durch den Antrieb sowohl des Vorderrads 14 als auch die Hinterradeinrichtung 16 ergibt sich eine Verbesserung der Traktion und der Steigfähigkeit und auch des Bremsvermögens bei hoher Manövrierbarkeit. Es sind dadurch beispielsweise auch steile Rampen befahrbar und beispielsweise auf einem ebenen Boden 18 ist eine höhere maximale Geschwindigkeit bei hoher Fahrsicherheit erreichbar.

Über die Anhängerkupplung 84 lässt sich die Bodenreinigungsmaschine 10 auch als Zugmaschine einsetzen. Sie kann dadurch beispielsweise in einen Fertigungsprozess integriert werden, bei dem sie Werkstücke über einen oder mehreren Anhänger transportiert, wobei gleichzeitig eine Bodenreinigung durchführbar ist.

Die Steuerungseinrichtung 44 steuert die erste Antriebseinrichtung 40 und die zweite Antriebseinrichtung 66 in Abhängigkeit von Signalen der Lenkwinkel-Sensoreinrichtung 38 und der Sensoreinrichtung 48 zur Ermittlung von Geschwindigkeitsvorgaben an.

Dadurch ist es beispielsweise möglich, eine Geschwindigkeitsbegrenzung in Abhängigkeit eines Lenkwinkels durchzuführen. Wenn beispielsweise die Steuerungseinrichtung 44 erkennt, dass bei einem bestimmten Lenkwinkel, detektiert über die Lenkwinkel-Sensoreinrichtung 38 eine Geschwindigkeitsvorgabe eines Bedieners zu hoch ist (detektiert über die Sensoreinrichtung 48), dann steuert die Steuerungseinrichtung 44 die erste Antriebseinrichtung 40 und die zweite Antriebseinrichtung 66 entsprechend an, um eine begrenzte Geschwindigkeit der Bodenreinigungsmaschine 10 zu erreichen.

Die Steuerungseinrichtung 44 steuert die erste Antriebseinrichtung 40 und die zweite Antriebseinrichtung 66 individuell an. Dadurch ist es möglich, unterschiedliche Drehzahlen bzw. Bahngeschwindigkeiten für das Vorderrad 14 und für das linke Hinterrad 50 und das rechte Hinterrad 52 zu erhalten. Dadurch kann grundsätzlich die Traktion verbessert werden und man erhält eine hohe Manövrierbarkeit.

Insbesondere ist ein erster Betriebsmodus vorgesehen, welcher beim Lenkwinkel von ca. 90° bzw. in der Nähe von 90° (beispielsweise mit Abweichungen von +/- 5°) liegt, wobei der Winkel von 90° bezogen auf die Geradeausfahrtrichtung 24 ist. Wenn ein solcher Lenkwinkel detektiert wird (über die Lenkwinkel-Sensoreinrichtung 38), dann sendet die Steuerungseinrichtung 44 an die zweite Antriebseinrichtung 66 ein Blockiersignal, welches den entsprechenden Motor der zweiten Antriebseinrichtung 66 blockiert. Über die Differentialeinrichtung 58 sind dann das linke Hinterrad 50 und das rechte Hinterrad 52 bezüglich der Radachse 54 gegenläufig frei drehbar. Dies ermöglicht es, dass ein kurvenäußeres Rad nach vorne dreht und ein kurveninneres Rad nach hinten dreht. Es ergibt sich dadurch eine maximale Wendigkeit, wobei in dem ersten Betriebsmodus der Antrieb der gesamten Bodenreinigungsmaschine 10 über die erste Antriebseinrichtung 40 durch Antrieb des Vorderrads 14 erfolgt.

Bei einem zweiten Betriebsmodus für Vorwärtsfahrt 26 oder Rückwärtsfahrt 28 haben das linke Hinterrad 50, das rechte Hinterrad 52 und das Vorderrad 14 die gleiche Bahngeschwindigkeit.

Wie oben erwähnt sorgt die Steuerungseinrichtung 44 dafür, dass bei Kurvenfahrt insbesondere in Abhängigkeit von dem Lenkwinkel die maximal mögliche Geschwindigkeit begrenzt wird, um ein sicheres Fahrverhalten zu gewährleisten.

Durch die Differentialeinrichtung 58 ist eine unterschiedliche Drehzahl für das linke Hinterrad 50 und das rechte Hinterrad 52 möglich. Dadurch erhält man eine hohe Traktion, durch die unterschiedliche Bodenverhältnisse an dem linken Hinterrad 50 und dem rechten Hinterrad 52 erfassbar sind.

Durch die Differentialeinrichtung 58 lässt sich bei Kurvenfahrt ein sicheres Fahrverhalten erreichen, wobei auch bei einem Lenkwinkel von 90° eine sichere Kurvenfahrt ermöglicht ist. Dadurch wiederum erhält man die erwähnte hohe Manövrierbarkeit. Durch eine mechanische Differentialeinrichtung 58 ist es insbesondere möglich, einen gemeinsamen Motor 28 zum Antrieb sowohl für das linke Hinterrad 50 als auch für das rechte Hinterrad 52 zu verwenden, wobei die mechanische Differentialeinrichtung unterschiedliche Drehzahlen erlaubt.

Die erfindungsgemäße selbstfahrende Bodenreinigungsmaschine 10 kann schneller fahren, weist eine höhere Steigfähigkeit und eine verbesserte Traktion auf. Sie kann als Zugmaschine oder Schubmaschine eingesetzt werden.

### Bezugszeichenliste

- 10: Bodenreinigungsmaschine
- 12: Karosserie
- 14: Vorderrad
- 16: Hinterradeinrichtung
- 18: Boden
- 20: Lenkeinrichtung
- 22: Mittelebene
- 24: Geradeausfahrt
- 26: Vorwärtsfahrt
- 28: Rückwärtsfahrt
- 30: Lenkachse
- 32: Radachse
- 34: Sitz
- 36: Lenkrad
- 38: Lenkwinkel-Sensoreinrichtung
- 40: erste Antriebseinrichtung
- 42: Radnabenmotor
- 44: Steuerungseinrichtung
- 46: Fahrpedal
- 48: Sensoreinrichtung
- 50: linkes Hinterrad
- 52: rechtes Hinterrad
- 54: Radachse
- 56: Mittelpunkt
- 58: Differentialeinrichtung
- 60: erste Welle
- 62: zweite Welle
- 64: Achsdifferentialgetriebe
- 66: zweite Antriebseinrichtung
- 68: Motor
- 70a: Signalleitung
- 70b: Signalleitung
- 72: Boden-Reinigungseinrichtung
- 74: Schrubbelement
- 76: Unterseite
- 78: Beaufschlagungseinrichtung
- 80: Saugeinrichtung
- 82: Saugbalken
- 84: Anhängekupplung
- 86: Hinterende
- 88: Vorderende

## Patentansprüche

1. Selbstfahrende Bodenreinigungsmaschine, umfassend
eine Boden-Reinigungseinrichtung (72),
ein lenkbares Vorderrad (14),
eine Lenkeinrichtung (20), welche dem Vorderrad (14) zugeordnet ist und welche ein Lenkrad (36) und eine mechanische Lenkstange umfasst, die das Vorderrad (14) und das Lenkrad (36) verbindet,
eine Lenkwinkel-Sensoreinrichtung (38), welche eine Winkelstellung des Lenkrads (36) oder der Lenkstange erfasst,
eine Hinterradeinrichtung (16) mit mindestens einem linken Hinterrad (50) und mindestens einem rechten Hinterrad (52),
eine erste Antriebseinrichtung (40) zum Antrieb des Vorderrads (14),
eine zweite Antriebseinrichtung (66) zum Antrieb der Hinterradeinrichtung (16),
eine Differentialeinrichtung (58) für die Hinterradeinrichtung (16), welche unterschiedliche Drehzahlen für das mindestens eine linke Hinterrad (50) und das mindestens eine rechte Hinterrad (52) ermöglicht, und
eine Steuerungseinrichtung (44), welche signalwirksam mit der Lenkwinkel-Sensoreinrichtung (38), der ersten Antriebseinrichtung (40) und der zweiten Antriebseinrichtung (66) verbunden ist, wobei die Steuerungseinrichtung (44) die erste Antriebseinrichtung (40) und die zweite Antriebseinrichtung (66) in Abhängigkeit von Signalen der Lenkwinkel-Sensoreinrichtung (38) ansteuert,
wobei die Steuerungseinrichtung (44) einen ersten Betriebsmodus umfasst, welcher bei einem Lenkwinkel von 90° oder in der Nähe von 90° bezogen auf eine Geradeausfahrtsstellung des Vorderrads die zweite Antriebseinrichtung (66) blockiert, und die Steuerungseinrichtung (44) einen zweiten Betriebsmodus umfasst, bei dem das Vorderrad (14), das mindestens eine linke Hinterrad (50) und das mindestens eine rechte Hinterrad (52) die gleiche Geschwindigkeit aufweisen.

2. Selbstfahrende Bodenreinigungsmaschine nach Anspruch 1, **dadurch gekennzeichnet, dass** die erste Antriebseinrichtung (40) ein Radmotor und insbesondere Radnabenmotor (42) umfasst.

3. Selbstfahrende Bodenreinigungsmaschine nach Anspruch 1 oder 2, **dadurch gekennzeichnet, dass** die erste Antriebseinrichtung (40) bei einer Lenkschwenkbewegung des Vorderrads (14) mitverschwenkt ist.

4. Selbstfahrende Bodenreinigungsmaschine nach einem der vorangehenden Ansprüche, **dadurch gekennzeichnet, dass** die erste Antriebseinrichtung (40) und/oder die zweite Antriebseinrichtung (66) einen Elektromotor umfasst.

5. Selbstfahrende Bodenreinigungsmaschine nach einem der vorangehenden Ansprüche, **dadurch gekennzeichnet, dass** die zweite Antriebseinrichtung (66) einen gemeinsamen Antrieb (68) für das mindestens eine linke Hinterrad (50) und das mindestens eine rechte Hinterrad (52) umfasst.

6. Selbstfahrende Bodenreinigungsmaschine nach einem der vorangehenden Ansprüche, **dadurch gekennzeichnet, dass** die Differentialeinrichtung (58) eine Achsdifferentialeinrichtung ist und/oder, dass die Differentialeinrichtung (58) ein mechanisches Differentialgetriebe umfasst.

7. Selbstfahrende Bodenreinigungsmaschine nach einem der vorangehenden Ansprüche, **gekennzeichnet durch** eine Sensoreinrichtung (48) zur Ermittlung einer Geschwindigkeitsvorgabe, welche signalwirksam mit der Steuerungseinrichtung (44) verbunden ist, wobei insbesondere die Steuerungseinrichtung (44) in Abhängigkeit von Signalen der Lenkwinkel-Sensoreinrichtung (38) und der Sensoreinrichtung (48) zur Ermittlung einer Geschwindigkeitsvorgabe die erste Antriebseinrichtung (40) und die zweite Antriebseinrichtung (66) ansteuert, und insbesondere, dass die Sensoreinrichtung (38) zur Ermittlung einer Geschwindigkeitsvorgabe eine Sensoreinrichtung zur Ermittlung einer Stellung eines oder mehrere Betätigungselemente ist, und insbesondere, dass in dem ersten Betriebsmodus das mindestens eine linke Hinterrad (50) und das mindestens eine rechte Hinterrad (52) Drehzahlen mit unterschiedlichem Vorzeichen aufweisen können.

8. Selbstfahrende Bodenreinigungsmaschine nach einem der vorangehenden Ansprüche, **gekennzeichnet durch** eine Mittelebene (22), zu welcher das mindestens eine linke Hinterrad (50) und das mindestens eine rechte Hinterrad (52) spiegelsymmetrisch angeordnet sind und an welcher bei Geradeausfahrtsstellung das Vorderrad (14) positioniert ist.

9. Selbstfahrende Bodenreinigungsmaschine nach einem der vorangehenden Ansprüche, **dadurch gekennzeichnet, dass** bei einer Kurvenfahrt ein Drehpunkt der Bodenreinigungsmaschine auf einem Mittelpunkt (56) einer Achse (54) der Hinterradeinrichtung (16) liegt.

10. Selbstfahrende Bodenreinigungsmaschine nach einem der vorangehenden Ansprüche, **gekennzeichnet durch** mindestens eine Anhängekupplung (84), welche insbesondere an einer Karosserie (12) angeordnet ist.

11. Selbstfahrende Bodenreinigungsmaschine nach einem der vorangehenden Ansprüche, **gekennzeichnet durch** eine Ausbildung als Schrubbmaschine und insbesondere Schrubb-Saug-Maschine, oder als Kehrmaschine.

12. Selbstfahrende Bodenreinigungsmaschine nach einem der vorangehenden Ansprüche, **dadurch gekennzeichnet, dass** die Boden-Reinigungseinrichtung (72) ein oder mehrere Schrubbelemente (74) aufweist, welche insbesondere zwischen dem Vorderrad (14) und der Hinterradeinrichtung (16) angeordnet sind.

13. Selbstfahrende Bodenreinigungsmaschine nach einem der vorangehenden Ansprüche, **dadurch gekennzeichnet, dass** die Boden-Reinigungseinrichtung (72) eine Reinigungsflüssigkeits-Beaufschlagungseinrichtung (78) umfasst, durch welche Reinigungsflüssigkeit auf einen Boden (18) ausbringbar ist, und insbesondere, dass ein Beaufschlagungsbereich zwischen dem Vorderrad (14) und der Hinterradeinrichtung (16) liegt.

14. Verfahren zum Betreiben einer selbstfahrenden Bodenreinigungsmaschine, bei dem ein durch eine Lenkeinrichtung (20) gelenktes Vorderrad (14) durch eine erste Antriebseinrichtung (40) angetrieben wird, wobei die Lenkeinrichtung (20) ein Lenkrad (36) und eine mechanische Lenkstange umfasst, die das Vorderrad (14) und das Lenkrad (36) verbindet, und eine Hinterradeinrichtung (16) mit mindestens einem linken Hinterrad (50) und mit mindestens einem rechten Hinterrad (52) durch eine zweite Antriebseinrichtung (66) angetrieben wird, wobei der Hinterradeinrichtung (16) eine Differentialeinrichtung (58) für das mindestens eine linke Hinterrad (50) und das mindestens eine rechte Hinterrad (52) zugeordnet ist, durch welche das mindestens eine linke Hinterrad (50) und das mindestens eine rechte Hinterrad (52) unterschiedliche Drehzahlen aufweisen können, und wobei eine Ansteuerung der ersten Antriebseinrichtung (40) für das Vorderrad (14) und der zweiten Antriebseinrichtung (66) für die Hinterradeinrichtung (16) in Abhängigkeit eines ermittelten Lenkwinkels für das Vorderrad (14) erfolgt, wobei der ermittelte Lenkwinkel die Winkelstellung des Lenkrads (36) oder der Lenkstange ist, und wobei ein erster Betriebsmodus vorgesehen ist, welcher bei einem Lenkwinkel von 90° oder in der Nähe von 90° bezogen auf eine Geradeausfahrtsstellung des Vorderrads die zweite Antriebseinrichtung (66) blockiert, und ein zweiter Betriebsmodus vorgesehen ist, bei dem das Vorderrad (14), das mindestens eine linke Hinterrad (50) und das mindestens eine rechte Hinterrad (52) die gleiche Geschwindigkeit aufweisen.

15. Verfahren nach Anspruch 14, **dadurch gekennzeichnet, dass** die Ansteuerung auch in Abhängigkeit einer ermittelten Geschwindigkeitsvorgabe erfolgt.

16. Verfahren zum Betreiben einer selbstfahrenden Bodenreinigungsmaschine nach Anspruch 14 oder 15, **dadurch gekennzeichnet, dass** bei einem ermittelten Lenkwinkel von 90° oder in der Nähe von 90° bezogen auf eine Geradeausfahrtsstellung ein Antrieb der Hinterradeinrichtung blockiert wird und eine Drehzahl für das mindestens eine linke Hinterrad und eine Drehzahl für das mindestens eine rechte Hinterrad sich mit unterschiedlichem Vorzeichen einstellen kann.

## Claims

1. Self-propelled surface cleaning machine, comprising:
a floor cleaning device (72),
a steerable front wheel (14),
a steering device (20) associated with the front wheel (14) and comprising a steering wheel (36) and a mechanical steering rod which connects the front wheel (14) and the steering wheel (36),
a steering angle sensor device (38) which detects an angular position of the steering wheel (36) or of the steering rod,
a rear wheel device (16) having at least one left rear wheel (50) and at least one right rear wheel (52),
a first drive device (40) for driving the front wheel (14),
a second drive device (66) for driving the rear wheel device (16),
a differential device (58) for the rear wheel device (16) that allows different speeds of rotation for the at least one left rear wheel (50) and the at least one right rear wheel (52), and
a control device (44) which is operatively connected for signal communication with the steering angle sensor device (38), the first drive device (40) and the second drive device (66), wherein the control device (44) controls the first drive device (40) and the second drive device (66) depending on signals from the steering angle sensor device (38),
wherein the control device (44) comprises a first operational mode which blocks the second drive device (66) at a steering angle of 90° or close to 90° relative to a straight ahead travel position of the front wheel, and wherein the control device (44) comprises a second operational mode in which the front wheel (14), the at least one left rear wheel (50) and the at least one right rear wheel (52) have the same velocity.

2. Self-propelled surface cleaning machine in accordance with claim 1, **characterized in that** the first drive device (40) comprises a wheel motor, in particular a wheel hub motor (42).

3. Self-propelled surface cleaning machine in accordance with claim 1 or 2, **characterized in that** in a steering, pivoting motion of the front wheel (14), the first drive device (40) is co-pivoted therewith.

4. Self-propelled surface cleaning machine in accordance with any one of the preceding claims, **characterized in that** the first drive device (40) and/or the second drive device (66) comprises an electric motor.

5. Self-propelled surface cleaning machine in accordance with any one of the preceding claims, **characterized in that** the second drive device (66) comprises a common drive (68) for the at least one left rear wheel (50) and the at least one right rear wheel (52).

6. Self-propelled surface cleaning machine in accordance with any one of the preceding claims, **characterized in that** the differential device (58) is an axle differential device and/or **in that** the differential device (58) comprises a mechanical differential gear.

7. Self-propelled surface cleaning machine in accordance with any one of the preceding claims, **characterized by** a sensor device (48) for detecting a velocity presetting, said sensor device (48) being operatively connected for signal communication with the control device (44), in particular wherein the control device (44) controls the first drive device (40) and the second drive device (66) depending on signals from the steering angle sensor device (38) and the sensor device (48) for detecting a velocity presetting, and in particular wherein the sensor device (38) for detecting a velocity presetting is a sensor device for detecting a position of one or more actuating elements, and in particular wherein the at least one left rear wheel (50) and the at least one right rear wheel (52) have rotational speeds of different signs when in the first operational mode.

8. Self-propelled surface cleaning machine in accordance with any one of the preceding claims, **characterized by** a middle plane (22) with respect to which the at least one left rear wheel (50) and the at least one right rear wheel (52) have mirror symmetry and at which is positioned the front wheel (14) when in its straight ahead travel position.

9. Self-propelled surface cleaning machine in accordance with any one of the preceding claims, **characterized in that** a pivot point of the surface cleaning machine is located at a middle point (56) of an axis (54) of the rear wheel device (16) when cornering.

10. Self-propelled surface cleaning machine in accordance with any one of the preceding claims, **characterized by** at least one trailer coupling (84) which is in particular arranged at a body (12).

11. Self-propelled surface cleaning machine in accordance with any one of the preceding claims, **characterized in that** the self-propelled surface cleaning machine is configured as a scrubbing machine, in particular as a scrubber vacuum machine, or as a sweeping machine.

12. Self-propelled surface cleaning machine in accordance with any one of the preceding claims, **characterized in that** the floor cleaning device (72) comprises one or more scrubbing elements (74) which are in particular arranged between the front wheel (14) and the rear wheel device (16).

13. Self-propelled surface cleaning machine in accordance with any one of the preceding claims, **characterized in that** the floor cleaning device (72) comprises a cleaning liquid application device (78) through which a cleaning liquid is applicable to a floor (18), and in particular **in that** an application area is located between the front wheel (14) and the rear wheel device (16).

14. Method for operating a self-propelled surface cleaning machine, wherein a front wheel (14) steered by a steering device (20) is driven by a first drive device (40), wherein the steering device (20) comprises a steering wheel (36) and a mechanical steering rod which connects the front wheel (14) and the steering wheel (36), and wherein a rear wheel device (16) having at least one left rear wheel (50) and at least one right rear wheel (52) is driven by a second drive device (66), wherein the rear wheel device (16) has associated with it a differential device (58) for the at least one left rear wheel (50) and the at least one right rear wheel (52) by way of which the at least one left rear wheel (50) and the at least one right rear wheel (52) can have different speeds of rotation, and wherein control of the first drive device (40) for the front wheel (14) and of the second drive device (66) for the rear wheel device (16) is realized depending on a detected steering angle for the front wheel (14), wherein the detected steering angle is the angular position of the steering wheel (35) or the steering rod, and wherein a first operational mode is provided which blocks the second drive device (66) at a steering angle of 90° or close to 90° relative to a straight ahead travel position of the front wheel, and wherein a second operational mode is provided in which the front wheel (14), the at least one left rear wheel (50) and the at least one right rear wheel (52) have the same velocity.

15. Method in accordance with claim 14, **characterized in that** control is also realized depending on a detected velocity presetting.

16. Method for operating a self-propelled surface cleaning machine in accordance with claim 14 or 15, **characterized in that**, at a detected steering angle of 90° or close to 90° relative to a straight ahead travel position, drive to the rear wheel device is blocked and a rotational speed of the at least one left rear wheel and a rotational speed of the at least one right rear wheel can occur with different signs.

## Revendications

1. Machine de nettoyage de sols automotrice, comprenant
un dispositif de nettoyage de sols (72),
une roue avant orientable (14),
un dispositif de direction (20), lequel est associé à la roue avant (14) et lequel comprend un volant (36) et une barre de direction mécanique reliant la roue avant (14) et le volant (36),
un dispositif de détection d'angle de direction (38), lequel détecte une position angulaire du volant (36) ou de la barre directrice,
un dispositif de roues arrière (16) comprenant au moins une roue arrière gauche (50) et au moins une roue arrière droite (52),
un premier dispositif d'entraînement (40) destiné à entraîner la roue avant (14),
un deuxième dispositif d'entraînement (66) destiné à entraîner le dispositif de roues arrière (16),
un dispositif différentiel (58) pour le dispositif de roues arrière (16), lequel dispositif autorise différentes vitesses de rotation entre la roue arrière gauche (50) et la roue arrière droite (52), et
un dispositif de commande (44), lequel est relié au dispositif de détection d'angle de direction (38), au premier dispositif d'entraînement (40) et au deuxième dispositif d'entraînement (66), le dispositif de commande (44) commandant le premier dispositif d'entraînement (40) et le deuxième dispositif d'entraînement (66) en fonction des signaux du dispositif de détection d'angle de direction (38),
le dispositif de commande (44) comprenant un premier mode de fonctionnement, lequel, dans le cas d'un angle de direction de 90° ou proche de 90° par rapport à une position de déplacement en ligne droite de la roue avant, bloque le deuxième dispositif d'entraînement (66), et le dispositif de commande (44) comprenant un deuxième mode de fonctionnement, dans lequel la roue avant (14), la roue arrière gauche (50) et la roue arrière droite (52) présentent la même vitesse.

2. Machine de nettoyage de sols automotrice selon la revendication 1, **caractérisée en ce que** le premier dispositif d'entraînement (40) comprend un moteur de roue et en particulier un moteur de moyeu de roue (42).

3. Machine de nettoyage de sols automotrice selon la revendication 1 ou 2, **caractérisée en ce que** le premier dispositif d'entraînement (40), dans le cas d'un mouvement de direction de pivotement de la roue avant (14), est amené à pivoter conjointement avec celle-ci.

4. Machine de nettoyage de sols automotrice selon l'une quelconque des revendications précédentes, **caractérisée en ce que** le premier dispositif d'entraînement (40) et/ou le deuxième dispositif d'entraînement (66) comprennent un moteur électrique.

5. Machine de nettoyage de sols automotrice selon l'une quelconque des revendications précédentes, **caractérisée en ce que** le deuxième dispositif d'entraînement (66) comprend un entraînement commun (68) pour la roue arrière gauche (50) et la roue arrière droite (52).

6. Machine de nettoyage de sols automotrice selon l'une quelconque des revendications précédentes, **caractérisée en ce que** le dispositif différentiel (58) est un dispositif différentiel d'essieu et/ou **en ce que** le dispositif différentiel (58) comprend un engrenage différentiel mécanique.

7. Machine de nettoyage de sols automotrice selon l'une quelconque des revendications précédentes, **caractérisée par** un dispositif de détection (48) permettant de déterminer une consigne de vitesse, lequel est relié au dispositif de commande (44), le dispositif de commande (44) commandant en particulier le premier dispositif d'entraînement (40) et le deuxième dispositif d'entraînement (66) en fonction des signaux du dispositif de détection d'angle de direction (38) et du dispositif de détection (48) permettant de déterminer une consigne de vitesse, et en particulier en ce que le dispositif de détection (38) permettant de déterminer une vitesse de consigne est un dispositif de détection permettant de déterminer une position d'un ou de plusieurs éléments d'actionnement, et en particulier en ce que, dans le premier mode de fonctionnement, la roue arrière gauche (50) et la roue arrière droite (52) peuvent présenter des vitesses de rotation de signe différent.

8. Machine de nettoyage de sols automotrice selon l'une quelconque des revendications précédentes, **caractérisée par** un plan central (22), par rapport auquel la roue arrière gauche (50) et la roue arrière droite (52) sont agencées en symétrie spéculaire et sur lequel la roue avant (14) est positionnée dans le cas d'une position de déplacement en ligne droite.

9. Machine de nettoyage de sols automotrice selon l'une quelconque des revendications précédentes, **caractérisée en ce que**, dans le cas d'un déplacement en courbe, un point de rotation de la machine de nettoyage de sols se situe sur un centre (56) d'un axe (54) du dispositif de roues arrière (16).

10. Machine de nettoyage de sols automotrice selon l'une quelconque des revendications précédentes, **caractérisée par** au moins un attelage (84), lequel est agencé en particulier sur une carrosserie (12).

11. Machine de nettoyage de sols automotrice selon l'une quelconque des revendications précédentes, **caractérisée par** une réalisation sous la forme d'une machine de récurage et en particulier d'une machine de récurage et d'aspiration, ou d'une machine de balayage.

12. Machine de nettoyage de sols automotrice selon l'une quelconque des revendications précédentes, **caractérisée en ce que** le dispositif de nettoyage de sols (72) comprend un ou plusieurs éléments de récurage (74), lesquels sont agencés en particulier entre la roue avant (14) et le dispositif de roues arrière (16).

13. Machine de nettoyage de sols automotrice selon l'une quelconque des revendications précédentes, **caractérisée en ce que** le dispositif de nettoyage de sols (72) comprend un dispositif d'alimentation en liquide de nettoyage (78), par l'intermédiaire duquel un liquide de nettoyage peut être émis sur un sol (18), et en particulier **en ce qu'**une zone d'alimentation se situe entre la roue avant (14) et l'ensemble de roues arrière (16).

14. Procédé permettant de faire fonctionner une machine de nettoyage de sols automotrice, selon lequel une roue avant (14) dirigée par un dispositif de direction (20) est entraînée par un premier dispositif d'entraînement (40), le dispositif de direction (20) comprenant un volant (36) et une barre de direction mécanique, qui relie la roue avant (14) et le volant (36), et un dispositif de roues arrière (16) comprenant au moins une roue arrière gauche (50) et au moins une roue arrière droite (52) entraînées par un deuxième dispositif d'entraînement (66), un dispositif différentiel (58) entre la roue arrière gauche (50) et la roue arrière droite (52) par l'intermédiaire duquel la roue arrière gauche (50) et la roue arrière droite (52) peuvent présenter des vitesses de rotation différentes, le dispositif différentiel étant associé au dispositif de roues arrière (16), et une commande du premier dispositif d'entraînement (40) pour la roue avant (14) et du deuxième dispositif d'entraînement (66) pour le dispositif de roues arrière (16) étant effectuée en fonction d'un angle de direction déterminé pour la roue avant (14), l'angle de direction déterminé étant la position angulaire du volant (36) ou de la barre de direction, et un premier mode de fonctionnement étant prévu, lequel, lorsque l'angle de direction est de 90° ou proche de 90° par rapport à une position de déplacement en ligne droite de la roue avant, bloque le deuxième dispositif d'entraînement (66), et un deuxième mode de fonctionnement est prévu, avec lequel la roue avant (14), la roue arrière gauche (50) et la ou la roue arrière droite (52) présentent la même vitesse.

15. Procédé selon la revendication 14, **caractérisé en ce que** la commande s'effectue également en fonction d'une consigne de vitesse déterminée.

16. Procédé permettant de faire fonctionner une machine de nettoyage de sols automotrice selon la revendication 14 ou 15, **caractérisée en ce que**, dans le cas d'un angle de direction déterminé de 90° ou proche de 90° par rapport à une position de déplacement en ligne droite, un entraînement du système de roues arrière est bloqué et une vitesse de rotation pour la roue arrière gauche et une vitesse de rotation pour la roue arrière droite de signe différent peuvent être obtenues.
